# EUROPÄISCHE PATENTSCHRIFT

(11) **EP 3 155 325 B1**
(45) Veröffentlichungstag und Bekanntmachung des Hinweises auf die Patenterteilung: **02.12.2020**
(21) Anmeldenummer: 14799682.1
(22) Anmeldetag: 29.10.2014
(51) Int. Cl.: F24F 5/00, F24D 5/02, F24F 12/00, F24D 5/12

(54) **WOHNRAUMLÜFTUNGSSYSTEM MIT HEIZEINHEIT**
VENTILATION SYSTEM FOR A ROOM WITH HEATING UNIT
SYSTÈME DE VENTILATION POUR DES PIÈCES D'HABITATION AVEC BLOC DE CHAUFFAGE

(30) Priorität: 10.06.2014 DE 102014108118
(43) Veröffentlichungstag der Anmeldung: 19.04.2017
(73) Patentinhaber: Heidelmeier, Hans-Jörg, 97769 Bad Brückenau (DE)
(72) Erfinder: Heidelmeier, Hans-Jörg, 97769 Bad Brückenau (DE)
(74) Vertreter: advotec.
(86) Internationale Anmeldenummer: PCT/EP2014/073196
(87) Internationale Veröffentlichungsnummer: WO 2015/188895

(56) Entgegenhaltungen:
- DE-A1- 10 315 802

## Beschreibung

Die Erfindung betrifft ein Wohnraumlüftungssystem zur Be- und Entlüftung des Wohnraums, wobei zur Energierückgewinnung ein Wärmerückgewinnungsgerät eingesetzt wird.

Aus dem Stand der Technik ist es bekannt, dass zur Steigerung der Energieeffizienz bzw. zur Reduzierung des Energieverbrauchs ein Belüftungssystem mit Wärmerückgewinnung eingesetzt wird. Hierbei weisen die derartigen Wohnraumlüftungssysteme zunächst einmal ein Wärmerückgewinnungsgerät auf, welches über einen Kreuz- oder Gegenstromwärmetauscher eine Wärmerückgewinnung aus dem Abluftstrom zur Erwärmung des Zuluftstroms ermöglicht. Der Zuluftstrom bzw. Abluftstrom wird hierbei von im Wärmerückgewinnungsgerät vorhandenen Ventilatoren erzeugt. Im Anschluss an das Wärmerückgewinnungsgerät erfolgt in üblicher Weise ein verteiltes Rohrsystem, über das die Zuluft auf die verschiedenen Räume verteilt wird, an denen jeweils Ausströmelemente angeordnet sind. Dem gegenüber werden in anderen Räumen Abluftventile angeordnet, über die die abzusaugende Luft über wiederum ein verteiltes Rohrsystem gesammelt und dem Wärmerückgewinnungsgerät zugeführt wird.

Weiterhin ist es aus dem Stand der Technik bekannt, dass zur Erhöhung der Temperatur der Zuluft bei besonders kalten Außentemperaturen elektrische Heizsysteme im Zuluftstrom eingesetzt werden. Darüber hinaus werden zur Anhebung der Temperatur des Außenluftstroms bei Temperaturen unterhalb von beispielsweise -5 °C in bekannten Belüftungsanlagen Solewärmetauscher in Anordnung von dem Außenlufteingang des Wärmerückgewinnungsgeräts eingesetzt.

Wenngleich unter Verwendung eines Wohnraumlüftungssystems mit Wärmerückgewinnung der Energieverbrauch insbesondere in kälteren Jahreszeiten im Gegensatz zur ansonsten erforderlichen Stoßlüftung erheblich reduziert werden kann und somit lediglich ein Heizungssystem geringerer Dimensionierung erforderlich ist, so wird dennoch grundsätzlich ergänzend zum Belüftungssystem ein Heizungssystem installiert. Dieses zusätzliche Heizungssystem, welches bei Gebäuden mit hochwertiger Wärmedämmung lediglich erforderlich ist, um bei besonders kalten Jahreszeiten die erforderliche Wohnraumtemperatur zu gewährleisten, führt zu erheblichem Installationsaufwand und somit zu erheblichen Installationskosten für das Heizungssystem und das Belüftungssystem. Aus der DE 103 15 802 A1 ist eine Lüftungsanordnung bekannt, bei der nachfolgend einem Kreuzwärmetauscher ein Luftverteilsystem eingesetzt wird, in dem eine Aufteilung auf einen beheizten Luftkanal und einen unbeheizten Luftkanal erfolgt. Im beheizten Luftkanal ist ein Heizregister zur Nachheizung des Luftstroms angeordnet. Sowohl der beheizte Luftkanal als auch der unbeheizte Luftkanal sind mit einer Mehrzahl von den einzelnen Räumen zugeordneten Luftverteilkanälen verbunden.

Nachteilig an dieser Lüftungsanordnung ist es, dass unabhängige Regelung der Luftströme in den beheizten Luftkanälen und den unbeheizten Luftkanälen nicht möglich ist.

Aufgabe der vorliegenden Erfindung ist es daher, ein Wohnraumlüftungssystem mit verbesserten Regeleigenschaften vorzuschlagen.

Die gestellte Aufgabe wird durch eine erfindungsgemäße Ausführungsform nach der Lehre des Anspruchs 1 gelöst.

Als wesentliche Komponente der vorliegenden Erfindung stellt sich die Art der Luftführung mit einer beheizten Luft und einer unbeheizten Luft dar, so dass hierzu eine neuartige Luftverteilvorrichtung entwickelt wurde, deren erfindungsgemäße Ausführungsform in Anspruch 9 angegeben ist.

Ein sich aus dem neuartigen Wohnraumlüftungssystem ergebendes erfindungsgemäßes Verfahren ist im Anspruch 15 angegeben.

Vorteilhafte Ausführungsformen sind Gegenstand der Unteransprüche.

Grundgedanke für die vorliegende Erfindung ist die Steigerung der Heizleistung von Belüftungssystemen im Gegensatz zu den bekannten Ausführungsformen, beispielsweise mit Elektroheizer, so dass gegebenenfalls in einzelnen Räumen oder weitgehend im gesamten Gebäude auf eine zusätzliche Heizung (abgesehen von beispielsweise dem Bad) verzichtet werden kann. Durch die Reduzierung des ansonsten erforderlichen Aufwands zur Installation eines Heizungssystems bzw. insbesondere bei Wegfall eines ergänzenden Heizungssystems wird ein erhebliches Kostenpotential geschaffen, so dass sich auch ein gewisser Mehraufwand im Belüftungssystem als besonders vorteilhaft hinsichtlich der Gesamtkosten darstellt.

Das hierzu eingesetzte Wohnraumlüftungssystem umfasst zunächst einmal ein Wärmerückgewinnungsgerät, welches entsprechend der üblichen Ausführungsform einen Gegenstromwärmetauscher aufweist, wobei ein Zuluftventilator im Wärmerückgewinnungsgerät eine Ansaugung eines Außenluftstroms bewirken kann, welcher nach Durchströmung des Gegenstromwärmetauschers unter Wärmerückgewinnung als erwärmter Zuluftstrom vom Wärmerückgewinnungsgerät abgeführt wird. Weiterhin bedarf es gattungsgemäß einer Luftverteilung, welche den Zuluftstrom kommend vom Wärmerückgewinnungsgerät auf die einzelnen Wohnräume aufteilen kann. Hierzu wird zumindest ein Anteil des Zuluftstroms zunächst einmal einem dem Wärmetauscher nachfolgenden beheizten Zuluftkanal zugeführt. Die Verteilung auf die Wohnräume erfolgt über mit dem beheizten Zuluftkanal verbundene Anschlusskanäle, an denen jeweils ein Zuluftverteilkanal angeschlossen werden kann.

Der jeweilige Zuluftverteilkanal kann sowohl als Einzelleitung unmittelbar zum entsprechenden Wohnraum geführt werden, sowie alternativ auch vorgesehen sein kann, dass sich der am Anschlusskanal angeschlossene Zuluftverteilkanal in weitere Luftkanäle verzweigen kann, welche gemeinsam in einem Wohnraum bzw. in mehreren gleichermaßen zu belüftenden Wohnräumen enden. Hierbei befinden sich am Ende der jeweiligen Zuluftverteilkanäle Zuluftöffnungen, welche sowohl von einfachen Ausströmelementen als auch ebenso von Zuluftventilen oder dergleichen gebildet werden können. Zumindest wird über die Zuluftöffnungen der Zuluftstrom in die unterschiedlichen Wohnräume eingeblasen.

Weiterhin umfasst das gattungsgemäße Wohnraumlüftungssystem ein im beheizten Luftkanal angeordnetes Zuluftheizgerät, mittels dem zumindest ein Anteil des Zuluftstroms durch Wärmeübertragung beheizt werden kann. Um welche Art von Zuluftheizgerät es sich hierbei handelt ist zunächst unerheblich, wobei im regulären Stand der Technik hierzu üblicherweise ein elektrisch beheizbares Element eingesetzt wird.

Eine raumabhängige Luftheizung wird ermöglicht, indem im Anschluss an den Gegenstromwärmetauscher eine Zuluftaufteilung erfolgt. Hierbei schließt sich an den Gegenstromwärmetauscher ein unbeheizter Luftkanal und der das Zuluftheizgerät aufweisende beheizte Luftkanal an. Zunächst unerheblich ist es, wie die Aufteilung auf den unbeheizten Luftkanal und den beheizten Luftkanal erfolgt und ob dies unmittelbar nach dem Gegenstromwärmetauscher oder mittelbar im weiteren Verlauf erfolgt.

Wesentlich ist es vielmehr, dass zur Realisierung einer wohnraumabhängigen Heizungsfunktion sowohl der unbeheizte Luftkanal als auch der beheizte Luftkanal mit den einzelnen Anschlusskanälen verbunden ist.

Unerheblich ist es, wenn weitere unbeheizte Anschlusskanäle ausschließlich mit dem unbeheizten Luftkanal verbunden sind, wobei dies ausschließlich in denjenigen Fällen zweckmäßig ist, wenn der zu belüftende Raum im Gebäude in keinem Fall durch ein Heizungssystem zu beheizen ist. Ebenso ist es unerheblich, wenn weitere beheizte Anschlusskanäle ausschließlich mit dem beheizten Luftkanal verbunden sind, wobei dies ausschließlich in denjenigen Fällen zweckmäßig ist, wenn der zu heizende Raum keinerlei Belüftung bedarf.

In beiden vorher genannten Fällen ist es jedoch aus praktischen Gründen vorteilhaft, wenn sowohl der unbeheizte Luftkanal als auch der beheizte Luftkanal mit den unbeheizten Anschlusskanälen bzw. mit den beheizten Anschlusskanälen verbunden ist, wobei lediglich der Durchgang vom beheizten Luftkanal in den unbeheizten Anschlusskanal bzw. vom unbeheizten Luftkanal in den beheizten Anschlusskanal verschlossen wird.

Zur individuellen Einstellung der wohnraumindividuellen Temperaturen ist weiterhin vorgesehen, dass im Übergang vom beheizten Luftkanal in den Anschlusskanal ein Warmluftventil angeordnet ist, welches hierbei zumindest manuell zwischen einer Geschlossenstellung und einer Offenstellung verstellbar ist. Hierbei kann die Verstellung sowohl in mehreren Stufen sowie auch ebenso stufenlos vorgesehen sein. Jedenfalls ist es für die erfindungsgemäße Ausführungsform erforderlich, dass im Übergang zu allen am beheizten Luftkanal angeschlossenen Anschlusskanälen entsprechende Warmluftventile vorhanden sind.

Durch den Einsatz von verstellbaren Warmluftventilen kann eine individuelle Temperatureinstellung in den einzelnen Wohnräumen vorgenommen werden, so dass nicht zwingend alle Wohnräume mit der identischen Lufttemperatur beaufschlag werden. Somit kann der Verwender des Wohnraumlüftungssystems bzw. der Bewohner des Gebäudes individuell die Temperaturen in den einzelnen Wohnräumen unter Anpassung der Stellung der Warmluftventile verändern.

Durch die Ausführungsform wird eine individuelle Heizungsfunktion ermöglicht, welche im Gegensatz zu den bekannten Ausführungsformen in derartiger Ausführungsform nicht möglich ist. Wenngleich es im Stand der Technik bekannt ist, den Zuluftstrom mittels eines Elektroheizers zu beheizen, so kann damit weder eine hinreichende Wärmeübertragung in den Wohnraum geschaffen werden, so dass auf ein weiteres Heizungssystem verzichtet werden kann, noch ist durch die bekannte Ausführungsform aus dem Stand der Technik eine wohnraumindividuelle Regelung der Temperatur möglich. Vielmehr wird es durch die bekannten Ausführungsformen lediglich vermieden, dass bei besonders kalten Temperaturen der Zuluftstrom unangenehm kalt ist. Durch die erfindungsgemäße Aufteilung des Zuluftstroms in den unbeheizten Luftkanal und in den mit dem Zuluftheizgerät versehenen beheizten Luftkanal wird erreicht, dass über die einzelnen Anschlusskanäle sowohl eine unbeheizte Zuluft als auch eine beheizte Zuluft den einzelnen Wohnräumen zugeführt werden kann, so dass eine wohnraumindividuelle Anpassung an die gewünschten Temperaturen möglich wird.

Zur Anpassung des Zuluftstroms im Belüftungsfall ohne eine Heizfunktion entsprechend der gewünschten Luftmengen verteilt auf die einzelnen Wohnräume ist es erfindungsgemäß vorgesehen, dass zwischen dem unbeheizten Luftkanal und zumindest einem Anschlusskanal ein Raumluftventil angeordnet ist, welches zwischen einer Anfangsstellung und einer Endstellung verstellbar ist. Um welche Art von Ventil es sich hierbei handelt, ist zunächst unerheblich, wobei es sich im einfachen Fall um eine manuell verstellbare Blende oder Klappe handeln kann. Weiter ist es erfindungsgemäß vorgesehen, dass das Raumluftventil nicht nur manuell sondern vielmehr zwischen einer Anfangsstellung und einer Endstellung in mehreren Stufen und/oder stufenlos gesteuert verstellbar ist. Das heißt, dass mittels eines motorischen Antriebs Einfluss auf die Stellung des Raumluftventils genommen werden kann, so dass in Abhängigkeit von den verschiedenen Belüftungssituationen die Stellung des Raumluftventils und somit die Strömung vom unbeheizten Luftkanal in den Anschlusskanal verändert werden kann. Zur Gewährleistung des Druckausgleichs als auch zur Gewährleistung der gewünschten Luftströmungsverhältnisse im Gebäude ist es analog zum bekannten Stand der Technik vorteilhaft, wenn das Wärmerückgewinnungsgerät einen Abluftventilator zur Absaugung eines Abluftstroms und zur Abführung einen durch Wärmerückgewinnung gekühlten Fortluftstrom aufweist. Hierbei wird die Abluft mittels zumindest eines Abluftsammlers von mehreren Abluftkanälen zusammengeführt, wobei am Anfang der Abluftkanäle sich jeweils Abluftöffnungen in unterschiedlichen Wohnräumen befinden. Das heißt, dass aus den einzelnen Wohnräumen, welche in aller Regel unterschiedlich sind zu den mit Zuluft versehenen Wohnräumen, die Abluft über die Abluftöffnungen durch die Abluftkanäle angesaugt und durch Abluftsammler zusammengeführt wird, wobei die Abluft sodann durch den Abluftventilator nach Durchströmung des Wärmerückgewinnungsgeräts als Fortluft aus dem Gebäude geleitet wird.

Weiterhin ist es sowohl bei den gattungsgemäßen Ausführungsformen als auch bei der erfindungsgemäßen Ausführung vorteilhaft, wenn das Wärmerückgewinnungsgerät einen integrierten oder einen parallelen Bypass aufweist, so dass bei warmen Außentemperaturen, bei denen eine Wärmerückgewinnung erforderlich ist, der Bypass anstelle des Wärmetauschers durchströmt wird.

Ebenso ist es sowohl bei den gattungsgemäßen Ausführungsformen als auch bei der erfindungsgemäßen Ausführung vorteilhaft, wenn vor dem Zuluftventilator und vor dem Abluftventilator austauschbar Filterelemente eingesetzt werden, so dass eine Verschmutzung der Ventilatoren und/oder des Wärmetauschers vermieden wird.

Zur vorteilhaften Beeinflussung der wohnraumindividuellen Temperaturen ist es besonders vorteilhaft, wenn im Übergang vom beheizten Luftkanal in jeden der Anschlusskanäle ein Warmluftventil angeordnet ist, welcher hierbei nicht nur manuell sondern vielmehr gesteuert verstellbar ist. Zumindest ist es erforderlich, dass über einen motorischen Antrieb die Stellung des Warmluftventils in Abhängigkeit von dem jeweiligen Belüftungs- bzw. Beheizungszustand verändert werden kann.

Durch den Einsatz von gesteuert verstellbaren Warmluftventilen kann eine individuelle Temperaturveränderung in den einzelnen Wohnräumen vorgenommen werden, so dass es nicht zwingend bei einem fest eingestellten Temperaturprofil je Wohnraum verbleibt. Somit kann der Verwender des Wohnraumlüftungssystems bzw. der Bewohner des Gebäudes individuell die Temperaturen in den einzelnen Wohnräumen unter Anpassung der Stellung der Warmluftventile verändern, ohne dass es einer manuellen Handhabung der Warmluftventile bedarf.

Hinsichtlich der Einstellung der Luftverteilung ist es vorteilhaft, wenn in jedem Übergang vom unbeheizten Luftkanal zum Anschlusskanal ein verstellbares Raumventil angeordnet ist. Hinsichtlich der Regelungsmöglichkeiten ist es besonders vorteilhaft, wenn hierbei mehrere oder alle der Raumventile gesteuert, d.h. motorisch, verstellbar sind.

Hierbei ist es weiterhin besonders vorteilhaft, wenn die Stellung der Raumluftventile und die Stellung der Warmluftventile unabhängig voneinander einstellbar sind. Hierbei ist im einfachen Fall die Stellung der Raumluftventile manuell festzulegen und wird insbesondere auf den reinen Belüftungsfall optimiert. Demgegenüber wird zur Regelung der gewünschten Temperatur die Veränderung der Stellung der Warmluftventile durch eine Steuerung vorgenommen.

Weiterhin ist es vorteilhaft, wenn ergänzend zu dem Raumluftventil im unbeheizten Luftkanal vor dem Übergang in die Anschlusskanäle ein Zuluftdrosselventil angeordnet wird. Hierbei kann vorgesehen sein, dass das Zuluftdrosselventil sowohl manuell als auch mittels Motorbetrieb gesteuert verstellbar ist. Bei einer vorteilhaften Auslegung der Luftverteilung auf die einzelnen Wohnräume kann durch die beeinflussende Stellung des manuell zu verstellenden Zuluftdrosselventils der optimale Volumenstrom im Belüftungsfall eingestellt werden. Im Fall eines motorisch verstellbaren Zuluftdrosselventils kann durch die Beeinflussung der Stellung des Zuluftdrosselventils weiterhin die Aufteilung des Zuluftstroms auf den unbeheizten Luftkanal und den beheizten Luftkanal aktiv beeinflusst werden.

Alternativ ist es vorteilhaft, wenn anstelle eines Zuluftdrosselventils ein Konstantvolumenstromregelelement vorhanden ist. Dieses Konstantvolumenstromregelelement bewirkt durch selbsttätige Anpassung eine Veränderung des Luftwiderstands bei Erhöhung des Zuluftdrucks, so dass das Konstantvolumenstromregelelement in aller Regel einen weitestgehend konstanten Volumenstrom passiert. Dies ist insbesondere dahingehend vorteilhaft, dass bei Steigerung der Leistung des Wärmerückgewinnungsgerätes insbesondere im Heizungsfall der Volumenstrom durch den unbeheizten Luftkanal im Wesentlichen konstant bleibt, während demgegenüber der anteilige Zuluftstrom durch den beheizten Luftkanal ansteigt.

Wenngleich es zur individuell temperierten Belüftung der einzelnen Wohnräume nicht erforderlich ist, individuellen Einfluss auf die Zustände in den Abluftkanälen zu nehmen, so ist es dennoch von Vorteil, wenn in mehreren Abluftkanälen und/oder in den Abluftöffnungen zumindest ein manuell verstellbares Abluftventil angeordnet ist. In einem einfachen Ausführungsfall ist hierbei im Abluftventil bereits eine Einstellmöglichkeit gegeben, so dass auf den anteiligen Abluftstrom Einfluss genommen werden kann. Sofern lediglich einfache Abluftöffnungen ohne einstellbare Abluftventile eingesetzt werden, so kann in vorteilhafter Weise alternativ ein entsprechendes Abluftventil im Abluftkanal angeordnet werden.

Besonders vorteilhaft ist es jedoch, wenn in zumindest einem Abluftkanal ein Abluftventil eingesetzt wird, welches nicht nur manuell sondern vielmehr mittels eines Motors gesteuert verstellbar ist. Hierbei kann sowohl vorgesehen sein, dass das Abluftventil in mehreren Stufen sowie auch stufenlos verstellbar ist. Durch die motorische Verstellbarkeit des Abluftventils kann in Abhängigkeit von dem jeweiligen Belüftungszustand Einfluss auf den im Abluftkanal vorhandenen Abluftstrom genommen werden. Von besonderem Vorteil ist hierbei beispielsweise eine Abluftöffnung im Flur des Gebäudes oder eine Anordnung an anderer hinsichtlich der Luftströmung und des Strömungsgeräusches unkritischen Stelle, welche für den üblichen Belüftungsfall nicht unbedingt erforderlich ist. So kann bei Erhöhung der Leistung des Wärmerückgewinnungsgeräts mit einer Erhöhung des Zuluftstroms ein erhöhter Abluftstrom in den verteilten Wohnräumen mit Abluftöffnung vermieden werden, sondern vielmehr wird der ansteigende Zuluftstrom durch den einsetzenden Abluftstrom bei einer motorischen Verstellung des Abluftventils, beispielsweise im Flur, ausgeglichen.

Zur vorteilhaften Regelung des Wohnraumlüftungssystems weist dieses unter anderem mehrere Temperatursensoren auf.

Hierbei wird zumindest ein Temperatursensor zur Erfassung einer raumabhängigen Wohnraumtemperatur eingesetzt. In vorteilhafter Weise werden je Wohnraum, dessen Temperatur individuell geregelt werden soll, jeweils Temperatursensoren eingesetzt.

Die Wahl der Temperatursensoren wird sich primär nach der Wahl eines oder mehrerer Temperaturbediengeräte richten, wobei in einer besonders einfachen Ausführungsform der Temperatursensor mit einem Temperaturbediengerät verbunden sein kann, so dass unmittelbar ein Temperaturregelwert zur Regelung des Wohnraumlüftungssystems erzeugt wird. Das heißt, in diesem Fall werden keine absoluten Temperaturen festgestellt, sondern vielmehr wird lediglich eine Abweichung von einem eingestellten Temperatursollwert festgestellt, welcher hierbei ebenfalls nicht als absolute Skala vorliegen muss, sondern vielmehr ist eine einheitslose Einstellung hinreichend.

Darüber hinausgehend ist es jedoch besonders vorteilhaft, wenn der Temperatursensor die absolute Temperatur des jeweiligen Wohnraums ermitteln kann, so dass dieser Temperaturwert der Regelung zur Verfügung steht.

Bei einer ersten vorteilhaften Ausführungsform wird hierzu ein zentrales Temperaturbediengerät zur Verfügung gestellt, anhand dessen mehrere Temperatursollwerte für die einzelnen Wohnräume einstellbar sind. Ergänzend oder alternativ ist es ebenso möglich, mehrere Temperaturbediengeräte einzusetzen, so dass von mehreren Wohnräumen aus ein raumabhängiger Temperatursollwert einstellbar ist.

Weiterhin ist es vorteilhaft, wenn der Steuerung des Wohnraumbelüftungssystems die Umgebungstemperatur außerhalb des Gebäudes bekannt ist, so dass anhand der Umgebungstemperatur auf den zu erwartenden Leistungsbedarf des Zuluftheizgerätes geschlossen werden kann. Hierzu ist es weiterhin besonders vorteilhaft, wenn die Warmlufttemperatur im beheizten Luftkanal nach dem Zuluftheizgerät erfasst wird.

Weiterhin ist es insbesondere zur Regelung und Überwachung des Wärmerückgewinnungsgeräts vorteilhaft, wenn die an den Eingängen und Ausgängen anliegenden Temperaturen bekannt sind. Hierzu weist das Wärmerückgewinnungsgerät in vorteilhafter Weise einen Temperatursensor vor dem Zuluftventilator zur Messung der Außenlufttemperatur, einen Temperatursensor zur Messung der Zulufttemperatur nach dem Gegenstromwärmetauscher, einen Temperatursensor zur Messung der Ablufttemperatur vor dem Abluftventilator und/oder einen Temperatursensor zur Messung der Fortlufttemperatur nach dem Gegenstromwärmetauscher auf.

Weiterhin ist es zur Regelung der Leistung des Wohnraumlüftungssystems besonders vorteilhaft, wenn mehrere Drucksensoren eingesetzt werden. Hierbei ist es unter anderem vorteilhaft, wenn ein Drucksensor zur Messung des Wohnraumluftdrucks im Gebäude sowie ein Drucksensor zur Messung des Umgebungsluftdrucks außerhalb des Gebäudes angeordnet sind, so dass bei Druckunterschieden vorteilhaft die Leistung des Zuluftventilators und/oder des Abluftventilators beeinflussbar ist.

Weiterhin wird vorteilhaft ein Drucksensor zur Messung des Zuluftdrucks nach dem Gegenstromwärmetauscher und/oder ein Drucksensor zur Messung des Abluftdrucks vor dem Abluftventilator eingesetzt, wobei anhand der Druckunterschiede ebenso auf einen Regelbedarf hinsichtlich der Leistung des Zuluftventilators und insbesondere des Abluftventilators geschlossen werden kann.

Weiterhin ist es möglich, einen Drucksensor zur Messung des Fortluftdrucks nach dem Gegenstromwärmetauscher sowie einen Drucksensor zur Messung des Außenluftdrucks vor dem Zuluftventilator einzusetzen.

Eine Messung des Warmluftdrucks im beheizten Luftkanal kann mittels eines vor dem Zuluftheizgerät angeordneten Drucksensors als auch ergänzend oder alternativ mittels eines nach dem Zuluftheizgerät angeordneten Drucksensors erfolgen. Anhand des ermittelten Warmluftdrucks kann eine Leistungsanpassung des Zuluftventilators vorgenommen werden. Insbesondere bei einem Abfall des Warmluftdrucks ist darauf zu schließen, dass ein größerer Luftstrom im beheizten Luftkanal erforderlich ist, so dass eine Leistungssteigerung des Zuluftventilators vorgenommen werden kann.

Weiterhin ist es vorteilhaft, wenn zumindest in einem Abluftkanal zwischen der im Wohnraum angeordneten Abluftöffnung und dem gesteuert verstellbaren Abluftventil ein Drucksensor zur Ermittlung des Absaugdrucks angeordnet ist. Anhand des Absaugdrucks kann darauf geschlossen werden, ob eine Leistungssteigerung des Abluftventilators erforderlich ist.

Wenngleich die Realisierung im Gegensatz zu Temperatursensoren oder Drucksensoren aufwendiger ist, so ist es besonders vorteilhaft, wenn ein Volumenstrommessgerät zur Ermittlung des Zuluftstroms nach dem Gegenstromwärmetauscher eingesetzt wird. Alternativ ist es ebenso möglich, ein Volumenstrommessgerät zur Messung des Volumenstroms im beheizten Luftkanal und ein Volumenstrommessgerät im unbeheizten Luftkanal einzusetzen. Hierzu wird alternativ und in besonders vorteilhafter Weise ergänzend ein Volumenstrommessgerät zur Ermittlung des Abluftstroms vor dem Abluftventilator oder zur Messung des Abluftstroms nach dem Gegenstromwärmetauscher eingesetzt. Durch einen Abgleich des Zuluftstroms mit dem Abluftstrom unter Anpassung der Leistung des Zuluftventilators und in besonders vorteilhafter Weise des Abluftventilators können ausgeglichene Strömungsverhältnisse in Zuluft und Abluft realisiert werden.

Aufgrund der Möglichkeit der Anpassung der Volumenströme ist es weiterhin besonders vorteilhaft, wenn zumindest in einem Wohnraum ein Leistungsschalter zur Einstellung eines Leistungssollwerts angeordnet ist. Dieser Leistungsschalter kann sowohl ein manuell zu schaltendes Bediengerät sein als auch ebenso ein automatisch wirkendes Schaltelement, wie beispielsweise ein Bewegungsmelder oder ein Feuchtigkeitssensor. Bei Feststellung einer Änderung eines Leistungssollwerts kann infolge dessen eine Änderung der Leistung des Zuluftventilators und/oder des Abluftventilators sowie eine Veränderung der Stellung des Raumluftventils, des Warmluftventils und/oder des Abluftventils vorgenommen werden.

In welcher Art das Zuluftheizgerät beheizt wird, ist zunächst unerheblich. Besonders vorteilhaft ist es jedoch, wenn das Zuluftheizgerät als Wärmetauscher von einem beheizbaren Fluid durchströmt werden kann. Hierbei ist vorgesehen, dass zur energetisch optimalen Beheizung das beheizbare Fluid von einer Wärmepumpe mit Wärmetauscher beheizt wird, wobei zur Energiegewinnung Wärmeenergie der Umgebungsluft oder aus das Erdreich durchlaufende Soleleitungen entzogen wird. Ergänzend oder alternativ ist es ebenso möglich, das beheizbare Fluid von einem Solarkollektor zu beheizen.

Besonders vorteilhaft ist die Auslegung des Wohnraumlüftungssystems, wenn neben der Heizfunktion ebenso eine Kühlfunktion realisierbar ist. Hierzu ist es besonders vorteilhaft, wenn das Zuluftheizgerät von einem gekühlten Fluid durchströmt werden kann. Zur Kühlung des das Zuluftheizgerät durchströmenden Fluids ist es ebenso möglich, dieses mittels einer Wärmepumpe zu kühlen, wobei im Gegenzug Wärme an die Umgebungsluft oder das Erdreich abgegeben wird oder besonders vorteilhaft im Gegenzug beispielsweise Brauchwasser erwärmt wird. Ergänzend oder alternativ ist es ebenso möglich, das gekühlte Fluid unmittelbar durch Einsatz eines Erdwärmetauschers ohne Einsatz einer Wärmepumpe zu kühlen.

Zur vorteilhaften Realisierung des Wohnraumlüftungssystems unter Betrachtung der einzelnen erforderlichen Komponenten bis zur Aufteilung in die einzelnen Zuluftverteilkanäle bzw. Abluftkanäle ist es in einer ersten vorteilhaften Ausführungsform möglich, die Zuluftaufteilung im Anschluss an das Wärmerückgewinnungsgerät durchzuführen. Hierbei können in besonders vorteilhafter Weise regulär verfügbare Wärmerückgewinnungsgeräte eingesetzt werden, ohne dass es einer diesbezüglichen Anpassung an das erfindungsgemäße Wohnraumlüftungssystem bedarf.

In einer vorteilhaften Alternative wird abweichend von der üblichen Ausführungsform eines Wärmerückgewinnungsgeräts dieses mit zwei Zuluftöffnungen versehen, so dass an einem der zwei Zuluftöffnungen der unbeheizte Luftkanal und am anderen der zwei Zuluftöffnungen der beheizte Luftkanal angeschlossen werden kann. Dementsprechend erfolgt die Aufteilung des Zuluftstroms bereits im Wärmerückgewinnungsgerät. Eine besonders vorteilhafte Ausführungsform des Wärmerückgewinnungsgeräts wird erreicht, wenn eine kompakte Gesamteinheit geschaffen wird, welche die Zuluftaufteilung auf den unbeheizten Luftkanal und den beheizten Luftkanal sowie den unbeheizten Luftkanal und den beheizten Luftkanal umfasst. Ebenso sind in diesem Fall die Anschlusskanäle, das Raumluftventil und die Warmluftventile im/am Wärmerückgewinnungsgerät anzuordnen.

Ergänzend oder in einer weiteren Alternative wird in vorteilhafter Weise die Wärmepumpe im/am Wärmerückgewinnungsgerät angeordnet, wobei der zugehörige Wärmetauscher zur Gewinnung der erforderlichen Wärmeenergie extern aufgestellt sein kann.

Zur Gewährleistung der Übertragung der erforderlichen Heizenergie zur Beheizung des Wohnraums unter Beachtung der erforderlichen Belüftung des gesamten Gebäudes ist es besonders vorteilhaft, wenn die Leistung des Wärmerückgewinnungsgeräts zwischen 200 bis 300 % derjenigen Nennleistung beträgt, welche zur reinen Belüftung des Gebäudes erforderlich ist. Die Nennleistung bestimmt sich entsprechend anhand der bekannten Berechnungsmethoden zur Belüftung des Gebäudes zur Vermeidung von Feuchtigkeitsschäden sowie zur hinreichenden Belüftung in Abhängigkeit von Personenanzahl und Raumvolumen. Durch die Anhebung der Leistung des Wärmerückgewinnungsgeräts auf das 2- bis 3-fache des zur Belüftung Erforderlichen kann sichergestellt werden, dass ein hinreichender Luftstrom insbesondere durch einen unbeheizten Luftkanal und einen beheizten Luftkanal geführt wird, so dass auch eine hinreichende Wärmemenge im beheizten Luftkanal auf den anteiligen Zuluftstrom übertragen werden kann.

Hierbei ist zur Auslegung des Wohnraumlüftungssystems, insbesondere hinsichtlich der Zuluftkanäle sowie der Abluftkanäle, der im Gegensatz zur üblichen Belüftung vergrößerte Volumenstrom zu beachten, so dass größere Querschnitte einzusetzen sind.

Ergänzend zu dem neugeschaffenen Wohnraumlüftungssystem wird eine neuartige erfindungsgemäße Luftverteilvorrichtung eingesetzt, welche zur Verwendung in einem entsprechenden Wohnraumlüftungssystem bestimmt ist. Hierbei umfasst die gattungsgemäße Luftverteilvorrichtung zunächst einmal einen unbeheizten Luftkanal dem ein unbeheizter Zuluftstrom zugeführt werden kann, wobei an diesem mehrere Anschlusskanäle angeschlossen sind, über deren Luftausgangsöffnungen der zugeführte Zuluftstrom verteilt abgeleitet werden kann. Die Anschlusskanäle sind endseitig hierbei derart ausgelegt, dass der Anschluss regulärer Zuluftkanäle ohne Weiteres möglich ist.

Die Luftverteilvorrichtung weist gegenüber der bekannten einfachen Luftverteilung ergänzend einen beheizten Luftkanalabschnitt auf, dem ein beheizter Zuluftstrom zugeführt werden kann, wobei ebenso der beheizte Luftkanalabschnitt mit jedem der Anschlusskanäle verbunden ist. In dieser Verbindung zwischen dem beheizten Luftkanalabschnitt und jedem der angeschlossenen Anschlusskanäle ist ein Warmluftventil angeordnet, welches zwischen einer Geschlossenstellung und einer Offenstellung gesteuert verstellbar ist. Hierbei ist es unerheblich, ob die Verstellung in mehreren Stufen oder stufenlos erfolgen kann. Zumindest kann das Warmluftventil motorisch angetrieben zwischen verschiedenen Stellungen verstellt werden, so dass ein unterschiedlicher freier Querschnitt zwischen dem beheizten Luftkanal und dem jeweiligen Anschlusskanal gegeben ist.

Somit kann eine Luftzusammenführung aus dem unbeheizten Luftkanal und dem beheizten Luftkanalabschnitt in denselben Anschlusskanal erfolgen. Anhand der Stellung des Warmluftventils kann Einfluss genommen werden auf die jeweilige Temperatur der zusammengeführten Luft im jeweiligen Anschlusskanal.

Zur Anpassung des Zuluftstroms im Belüftungsfall ohne eine Heizfunktion entsprechend der gewünschten Luftmengen verteilt auf die einzelnen Wohnräume ist es erfindungsgemäß vorgesehen, dass zwischen dem unbeheizten Luftkanal und zumindest einem Anschlusskanal ein Raumluftventil angeordnet ist, welches zwischen einer Anfangsstellung und einer Endstellung verstellbar ist. Um welche Art von Ventil es sich hierbei handelt, ist zunächst unerheblich, wobei es sich im einfachen Fall um eine manuell verstellbare Blende oder Klappe handeln kann.

Weiter ist es erfindungsgemäß vorgesehen, dass das Raumluftventil nicht nur manuell sondern vielmehr zwischen einer Anfangsstellung und einer Endstellung in mehreren Stufen und/oder stufenlos gesteuert verstellbar ist. Das heißt, dass mittels eines motorischen Antriebs Einfluss auf die Stellung des Raumluftventils genommen werden kann, so dass in Abhängigkeit von den verschiedenen Belüftungssituationen die Stellung des Raumluftventils und somit die Strömung vom unbeheizten Luftkanal in den Anschlusskanal verändert werden kann.

Durch die neu geschaffene Luftverteilvorrichtung ist es möglich, unterschiedlich Zuluftströme, d.h. einen unbeheizten Zuluftstrom und einen beheizten Zuluftstrom, in mehrere Anschlusskanäle je Anschlusskanal individuell zusammenzuführen, so dass raumindividuelle Temperaturprofile ermöglicht werden. Hierbei ist es relevant, dass die Strömung vom beheizten Luftkanal in den jeweiligen Anschlusskanal über ein regelbares Warmluftventil individuell beeinflussbar ist.

In einer vorteilhaften Ausführungsform umfasst die Luftverteilvorrichtung zumindest ein Raumluftventil, welches im Übergang vom unbeheizten Luftkanal in zumindest einem Anschlusskanal angeordnet ist. In besonders vorteilhafter Weise weist jede Verbindung von dem unbeheizten Luftkanal in jeden Anschlusskanal ein Raumluftventil auf, welches zumindest manuell zwischen einer Anfangsstellung und einer Endstellung in mehreren Stufen und/oder stufenlos einstellbar ist. Hierbei sind in besonders vorteilhafter Weise zumindest ein Raumluftventil und/oder alle vorhandenen Raumluftventile motorisch gesteuert verstellbar. Es ist dabei besonders vorteilhaft, wenn die Raumluftventile und die Warmluftventile unabhängig voneinander einstellbar sind.

Weiterhin ist es besonders vorteilhaft, wenn die Luftverteilvorrichtung nicht nur den beheizten Luftkanalabschnitt aufweist, welchem ein beheizter Zuluftstrom zugeführt werden kann, sondern vielmehr ein beheizter Luftkanal vorhanden ist, welcher einen ersten Luftkanalabschnitt und nachfolgend den beheizten Luftkanalabschnitt aufweist. Hierbei ist es erforderlich, dass im ersten Luftkanalabschnitt ein Zuluftheizgerät angeordnet ist, mittels dem die dem beheizten Luftkanal zugeführte Zuluft beheizt wird, so dass nachfolgend im beheizten Luftkanalabschnitt entsprechend die beheizte Zuluft vorliegt.

Einerseits ist es möglich die Luftverteilvorrichtung mit zwei Eingängen zu versehen, wobei ein Eingang am beheizten Luftkanalabschnitt bzw. am beheizten Luftkanal und der andere Eingang am unbeheizten Luftkanal angeordnet ist. Jedoch ist es besonders vorteilhaft, wenn die Luftverteilvorrichtung eine einzelne Lufteingangsöffnung aufweist, wobei in der Zuluftverteilvorrichtung eine Zuluftaufteilung auf den unbeheizten Luftkanal und den beheizten Luftkanal erfolgt. Somit kann in besonders vorteilhafter Weise das Wohnraumlüftungssystem durch Verwendung eines regulären Wärmerückgewinnungsgeräts und den Einsatz einer vorteilhaften Ausführungsform einer erfindungsgemäßen Luftverteilvorrichtung gebildet werden.

Zur Vermeidung einer individuellen Ausführungsform der Luftverteilvorrichtung in Abhängigkeit von Anzahl der erforderlichen Anschlusskanäle ist es weiterhin besonders vorteilhaft, wenn die Luftverteilvorrichtung mehrere Anschlusskanäle aufweist, welche üblicherweise erforderlich sind. Somit kann beispielsweise vorgesehen sein, dass die Luftverteilvorrichtung vier Anschlusskanäle aufweist, wobei entsprechend zumindest vier Warmluftventile für die vier Anschlusskanäle erforderlich sind und in vorteilhafter Weise ebenso vier Raumluftventile vorgesehen sind. Darüber hinaus wird ergänzend die Luftverteilvorrichtung derart ausgelegt, dass diese modular um Segmentabschnitte erweiterbar ist. Jeder Segmentabschnitt erweitert hierbei jeweils den unbeheizten Luftkanal und den beheizten Luftkanalabschnitt der Luftverteilvorrichtung und umfasst zumindest einen Anschlusskanal, wobei entsprechend wiederum zumindest ein Warmluftventil und weiterhin vorteilhaft ein Raumluftventil vorhanden ist. Durch die modulare Erweiterbarkeit der Luftverteilvorrichtung kann ein Grundmodul eingesetzt werden, welches je nach Anzahl der erforderlichen Anschlusskanäle flexibel erweiterbar ist.

Ergänzend ergibt sich aus der erfindungsgemäßen Ausführungsform des Wohnraumlüftungssystems eine neue erfindungsgemäße Verfahrensweise zur Wohnraumklimatisierung. Erforderlich ist hierbei zunächst ein Wohnraumlüftungssystem in einer Ausführungsform entsprechend der vorherigen Beschreibung.

Beim erfindungsgemäßen Verfahren sind zunächst zwei unterschiedliche Aspekte zu betrachten, wobei dies zum einen die Auslegung und die Inbetriebnahme des Wohnraumlüftungssystems betrifft und zum anderen die Regelung des Wohnraumlüftungssystems unter Verwendung der Heizfunktion.

Zur Auslegung ist - wie bei jedem regulären Wohnraumlüftungssystem - zunächst einmal die nominale Luftmenge zu bestimmen. Hierbei ist der reine Belüftungsfall ohne Beachtung der Heizfunktion zu betrachten. Der nominale Luftstrom sowie die jeweiligen nominalen wohnraumbezogenen Luftmengen können in bekannter Art und Weise ermittelt werden, wobei sich dies aus der Personenzahl, dem Raumvolumen und dem erforderlichen Schutz vor Feuchtigkeit bestimmt. Die hierzu notwendigen Berechnungen sind dem Fachmann hinlänglich bekannt. Hieraus resultiert eine regulär erforderliche Größe eines Wärmerückgewinnungsgeräts zunächst unter Vernachlässigung der Heizfunktion.

Um nunmehr erfindungsgemäß die Heizfunktion entsprechend den Erfordernissen einbinden zu können, ist in einem zweiten Schritt die Leistung des Wohnraumlüftungssystems auf einen Zuluftstrom von 200% bis 300% des nominalen Luftstroms auszulegen. Das heißt, es ist ein Wärmerückgewinnungsgerät erforderlich, welches die zwei- bis dreifache Leistung des zur reinen Belüftung erforderlichen Geräts aufweist. Dabei ist bei der Auslegung des verteilten Rohrsystems die erhöhte Leistung des gewählten Wärmerückgewinnungsgeräts mit dem höheren maximalen Luftstrom zu beachten, welches in der Regel eine Vergrößerung der Querschnitte der Luftkanäle im Gegensatz zu der regulären Ausführung einer Belüftungsanlage erfordert.

Wenngleich es besonders vorteilhaft ist, wenn durch Berechnung bereits eine optimale Luftaufteilung entsprechend den gewünschten raumbezogenen Luftmengen erzielt wird, so ist in aller Regel dennoch bei Inbetriebnahme des Wohnraumlüftungssystems eine Anpassung an die geforderten Luftmengen erforderlich. Hierzu werden bei der Inbetriebnahme zunächst sämtliche Warmluftventile geschlossen, wobei sodann der Zuluftstrom auf den nominalen Luftstrom eingestellt wird. Nunmehr erfolgt eine Anpassung von Querschnitten, so dass sich die wohnraumbezogenen Luftmengen an den Zuluftöffnungen in den einzelnen Wohnräumen einstellen. Die Anpassung von Querschnitten wird hierbei in besonders vorteilhafter Weise in der Verbindung vom unbeheizten Zuluftkanal zu den Anschlusskanälen vorgenommen. Eine besonders komfortable und einfache Einstellmöglichkeit ist gegeben, wenn die Anpassung der Querschnitte durch den Einsatz von Raumluftventilen erfolgt.

Im Betrieb des Wohnraumlüftungssystems zeichnet sich das erfindungsgemäße Verfahren dadurch aus, dass ausgehend von einem erfassten Temperaturregelwert die Leistung des Zuluftheizgeräts sowie die Stellung der Warmluftventile beeinflusst wird. Hierbei kann in besonders vorteilhafter Weise mit einer entsprechenden Steuerung bzw. Regelung anhand der anliegenden Temperaturregelwerte der zu erwartende Leistungsbedarf des Zuluftheizgeräts ermittelt werden. Ausgehend von dieser zunächst ermittelten Leistung kann eine Nachregelung aufgrund der im beheizten Zuluftkanalabschnitt gemessenen Warmlufttemperatur erfolgen. Demgegenüber erfolgt die Einstellung der jeweiligen Warmluftventile in Abhängigkeit von den raumbezogenen Temperaturregelwerten. Das heißt, dass bei Anliegen eines Temperaturregelwerts, was eine erforderliche Temperatursteigerung signalisiert, das zugehörige Warmluftventil weiter geöffnet wird.

Demgegenüber wird die Leistung des Zuluftventilators in der erfindungsgemäßen Verfahrensweise über die Ermittlung des Warmluftdrucks im beheizten Luftkanal geregelt. Wenngleich ebenso eine Vielzahl weiterer Parameter zur Bestimmung der Leistung des Zuluftventilators herangezogen werden kann, so wird durch Feststellen eines zu geringen Warmluftdrucks unmittelbar auf eine zu geringe Leistung des Zuluftventilators geschlossen werden, in dessen Folge dessen Leistung gesteigert wird.

Darüber hinaus ergeben sich aus dem erfindungsgemäßen Verfahren weitere vorteilhafte Ausführungsformen, welche sich für den Fachmann in naheliegender Weise aus der vorherigen Beschreibung des erfindungsgemäßen Wohnraumlüftungssystems mit seinen vorteilhaften Komponenten ergeben.

Zumindest ist es vorteilhaft, wenn in Abhängigkeit von der Stellung der Warmluftventile im Gegenzug die Stellung der Raumluftventile geändert wird. Beispielsweise kann vorgesehen sein, dass bis zu 150% des nominellen Wohnraum bezogenen Luftstroms die Stellung der Raumluftventile unverändert bleibt, jedoch bei darüber hinaus gehenden Wärmebedarf das jeweilige Raumluftventil bei weiterer Öffnung des Warmluftventils zunehmend geschlossen wird.

Die Regelung des Abluftventilators kann auf vielfältige Weise erfolgen. In der einfachsten Variante wird die Leistung des Abluftventilators an die Leistung des Zuluftventilators angepasst. Da sich jedoch bei unterschiedlichen Leistungen des Zuluftventilators und ebenso des Abluftventilators, insbesondere bei Veränderung der Stellung der Warmluftventile, die Strömungsverhältnisse verändern, ist ein Strömungsausgleich zwischen dem Zuluftstrom und dem Abluftstrom nicht immer gewährleistet. Daher ist es vorteilhaft, wenn weitere Messwerte zur Nachregelung des Abluftventilators verwendet werden, wie zum Beispiel der Abluftdruck und/oder der Absaugdruck, der Wohnraumluftdruck in Verbindung mit dem Umgebungsluftdruck oder besonders vorteilhaft der Zuluftstrom in Verbindung mit dem Abluftstrom.

Zur Verhinderung einer unerwünschten Strömung in Wohnräumen mit Abluftventilen wird in weiterer vorteilhafter Weise die Stellung des Abluftventils in Abhängigkeit von der Leistung des Zuluftventilators eingestellt.

Darüber hinaus ist es vorteilhaft, wenn die Leistung des Zuluftventilators und des Abluftventilators und/oder die Stellung der Warmluftvenile, der Raumluftventile und der Abluftventile in Abhängigkeit von Leistungssollwerten veränderbar sind.

In der nachfolgenden Figur wird schematisch ein erfindungsgemäßes Wohnraumlüftungssystem 01 mit einer erfindungsgemäßen Luftverteilvorrichtung 11 zur Durchführung des erfindungsgemäßen Verfahrens skizziert.

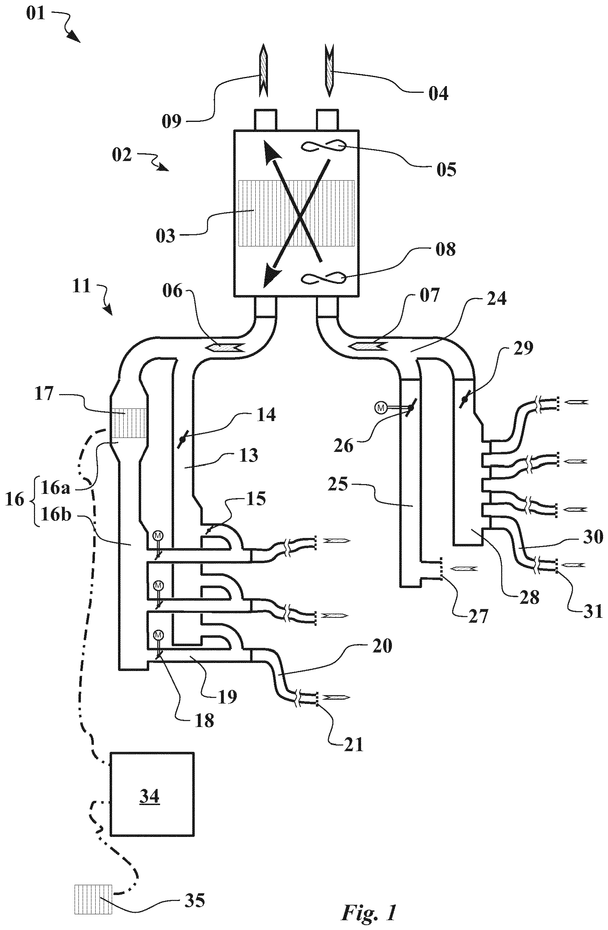

Zu erkennen ist die in **Figur 1** schematisch dargestellte Ausführung des erfindungsgemäßen Wohnraumlüftungssystems 01 mit dem Wärmerückgewinnungsgerät 02, welches in diesem Ausführungsbeispiel einen aus dem Stand der Technik bekannten Aufbau aufweist. Insofern besitzt das Wärmerückgewinnungsgerät 02 die vier Anschlüsse für Außenluft, Zuluft, Abluft und Fortluft. Ein über einen Anschluss einströmender Außenluftstrom 04 wird von einem im Wärmerückgewinnungsgerät 02 integrierten Zuluftventilator 05 durch Ansaugung bewirkt. Dieser bläst nachfolgend den Außenluftstrom 04 durch einen Gegenstromwärmetauscher 03 und wird erwärmt als Zuluftstrom 06 durch einen Zuluftanschluss aus dem Wärmerückgewinnungsgerät 02 abgeleitet. Demgegenüber wird über einen Abluftanschluss ein Abluftstrom 07 vom Abluftventilator 08 angesaugt, welcher in Gegenrichtung durch den Gegenstromwärmetauscher 03 geführt wird und sodann im abgekühlten Zustand aus dem Fortluftanschluss als Fortluftstrom 09 abgeführt wird.

An den Zuluftanschluss des Wärmerückgewinnungsgeräts 02 schließt sich die erfindungsgemäße Luftverteilvorrichtung 11 an, welche zunächst eine Aufteilung des Zuluftstroms 06 auf einen unbeheizten Luftkanal 13 und einen beheizten Luftkanal 16 bewirkt. Dieser beheizte Luftkanal 16 teilt sich in einen ersten Luftkanalabschnitt 16a und einen sich daran anschließenden beheizten Luftkanalabschnitt 16b auf. Im ersten Luftkanalabschnitt 16a ist ein Zuluftheizgerät 17 angeordnet, welches als Wärmetauscher Wärmeenergie auf den anteiligen Zuluftstrom übertragen kann.

In diesem Ausführungsbeispiel wird das Zuluftheizgerät 17 von einer Wärmepumpe 34 beheizt, die wiederum mit einem weiteren Wärmetauscher 35 zur Gewinnung der Wärmeenergie verbunden ist.

Im unbeheizten Luftkanal 13 befindet sich ein Zuluftdrosselventil 14 zur optimalen Einstellung der Zuluft für die reine Belüftung der Wohnräume. Wesentlich für die erfindungsgemäße Ausführung ist es, dass sowohl der unbeheizte Luftkanal 13 als auch der beheizte Luftkanalabschnitt 16b mit einer Mehrzahl von Anschlusskanälen 19 verbunden sind, wobei an den Anschlusskanälen 19 jeweils wohnraumindividuelle Zuluftverteilkanäle 20 angeschlossen werden können. Diese Zuluftverteilkanäle 20 führen über Zuluftöffnungen 21 den Zuluftstrom 06 in die einzelnen Wohnräume. Zur Einstellung des optimalen Volumenstroms zur Belüftung ist zumindest in einem Übergang vom unbeheizten Luftkanal 13 in den entsprechenden Anschlusskanal 19 ein Raumluftventil 15 angeordnet. Demgegenüber ist es für die erfindungsgemäße Ausführungsform erforderlich, dass zwischen dem beheizten Luftkanalabschnitt 16b und jedem der Anschlusskanäle 19 ein Warmluftventil 18 angeordnet wird, welches in Stufen oder stufenlos verstellbar ist. Entsprechend der vorteilhaften Ausführung wird die Verstellung der Warmluftkanäle gesteuert mittels eines Elektromotors vorgenommen.

Analog zu den üblichen Wohnraumlüftungssystemen bedarf es der Ableitung eines Abluftstroms aus den verschiedenen Wohnräumen, so dass über ein verteiltes Netz an Abluftkanälen 30 der Abluftstrom 07 zusammen geführt über Abluftsammler 28 zum Wärmerückgewinnungsgerät 02 geführt werden kann. Zur optimalen Belüftung des Wohnraums ist es ebenso wie in den bekannten Ausführungsformen vorteilhaft, wenn die jeweilige Luftmenge an den einzelnen Abluftkanälen einstellbar ist, wobei dies in einer vorteilhaften Weise durch Verwendung von einstellbaren Abluftventilen an den Abluftöffnungen 31 erfolgt. Darüber hinaus ist es möglich den Abluftstrom durch ein Abluftdrosselventil 29 zu beeinflussen.

Da erfindungsgemäß vorgesehen ist, dass zur Beheizung des Wohnraums die Luftmenge gesteigert wird, ist es weiterhin in diesem Ausführungsbeispiel vorgesehen, dass eine separate Abluftöffnung 27 verwendet wird, die beispielsweise im Flur angeordnet sein kann. Diese Abluftöffnung 27 führt über einen Abluftkanal 25 zu einem Abluftsammler 24, welcher den gesamten Abluftstrom 07 dem Wärmerückgewinnungsgerät 02 zuführt. Die den zusätzlichen Abluftkanal 25 durchströmende Menge wird kontrolliert durch die Verwendung eines motorisch verstellbaren Abluftventils 26.

## Patentansprüche

1. Wohnraumlüftungssystem (01) mit einem Wärmerückgewinnungsgerät (02), welches einen Gegenstromwärmetauscher (03) und einen Zuluftventilator (05) zur Ansaugung eines Außenluftstroms (04) und Abführung eines durch Wärmerückgewinnung erwärmten Zuluftstroms (06) aufweist, und mit einer Zuluftverteilvorrichtung (11) mit einem beheizten Luftkanal (16) und mit mehreren mit diesem verbundenen Anschlusskanälen (19), an denen jeweils ein Zuluftverteilkanal (20) angeschlossen werden kann, und mit einem im beheizten Luftkanal (16) angeordneten Zuluftheizgerät (17), in dem zumindest ein Anteil des Zuluftstroms (06) durch Wärmeübertragung beheizt werden kann, wobei im Anschluss an den Gegenstromwärmetauscher (03) eine Zuluftaufteilung auf einen unbeheizten Luftkanal (13) und den beheizten Luftkanal (16) erfolgt, wobei weiterhin der unbeheizte Luftkanal (13) mit jedem der Anschlusskanäle (19) verbunden ist, und wobei in der Verbindung vom beheizten Luftkanal (16) und jedem der Anschlusskanäle (19) ein zumindest zwischen einer Geschlossenstellung und einer Offenstellung in mehreren Stufen und/oder stufenlos verstellbares Warmluftventil (18) angeordnet ist,
**dadurch gekennzeichnet,**
**dass** zwischen dem unbeheizten Luftkanal (13) und zumindest einem, insbesondere jedem, Anschlusskanal (19) ein Raumluftventil (15) angeordnet ist, welches zumindest manuell, insbesondere gesteuert, zwischen einer Anfangsstellung und einer Endstellung in mehreren Stufen und/oder stufenlos einstellbar ist, wobei die Raumluftventile (15) und die Warmluftventile (18) unabhängig voneinander einstellbar sind.

2. Wohnraumlüftungssystem (01) nach Anspruch 1,
**dadurch gekennzeichnet,**
**dass** das Wärmerückgewinnungsgerät (02) einen Abluftventilator (08) zur Ansaugung eines Abluftstroms (07) und zur Abführung eines durch Wärmerückgewinnung gekühlten Fortluftstroms (09) aufweist, wobei die Abluft mittels zumindest eines Abluftsammlers (24, 28) von mehreren Abluftkanälen (25, 30) zusammengeführt werden kann, an deren (25, 30) Anfang sich Abluftöffnungen (27, 31) in unterschiedlichen Wohnräumen befinden.

3. Wohnraumlüftungssystem (01) nach Anspruch 1 oder 2,
**dadurch gekennzeichnet,**
**dass** die Warmluftventile (18) gesteuert verstellbar sind.

4. Wohnraumlüftungssystem (01) nach Anspruch oder nach Anspruch 2 und 3,
**dadurch gekennzeichnet,**
**dass** in mehreren, insbesondere in allen, Abluftkänalen (25, 30) und/oder in den Abluftöffnungen (27, 31) ein zumindest manuell verstellbares Abluftventil (26, 29) angeordnet ist, wobei zumindest ein Abluftventil (26) zumindest zwischen einer Geschlossenstellung und einer Offenstellung, insbesondere in mehreren Stufen und/oder stufenlos, gesteuert verstellbar ist.

5. Wohnraumlüftungssystem (01) nach einem der Ansprüche 1 bis 4,
**gekennzeichnet durch**
mehrere der folgenden Komponenten:
a) Temperatursensoren zur Ermittlung
- raumabhängiger Wohnraumtemperaturen,
- der Umgebungstemperatur außerhalb des Gebäudes,
- der Außenlufttemperatur vor dem Zuluftventilator (05),
- der Zulufttemperatur nach dem Gegenstromwärmetauscher (03),
- der Ablufttemperatur vor dem Abluftventilator (08),
- der Fortlufttemperatur nach dem Gegenstromwärmetauscher (03),
- der Warmlufttemperatur im beheizten Luftkanal (16) nach dem Zuluftheizgerät (17);
b) zumindest ein im Wohnraum angeordnetes Temperaturbediengerät zur Festlegung, insbesondere raumabhängiger, Temperatursollwerte;
c) Drucksensoren zur Ermittlung
- des Wohnraumluftdrucks im Gebäude,
- des Umgebungsluftdrucks außerhalb des Gebäudes,
- des Außenluftdrucks vor dem Zuluftventilator (05),
- des Zuluftdrucks nach dem Gegenstromwärmetauscher (03),
- des Abluftdrucks vor dem Abluftventilator (08),
- des Fortluftdrucks nach dem Gegenstromwärmetauscher (03),
- des Warmluftdrucks im beheizten Luftkanal (16),
- des Absaugdrucks in einem Abluftkanal (25) zwischen Abluftöffnung (27) und Abluftventil (26);
d) Volumenstrommessgerät, insbesondere Flügelradmessgerät, zur Ermittlung
- des Zuluftstroms nach dem Gegenstromwärmetauscher (03),
- des Abluftstroms vor dem Abluftventilator (08) oder nach dem Gegenstromwärmetauscher (03);
e) zumindest einen im Wohnraum angeordneten Leistungsschalter zur Einstellung eines Leistungssollwertes.

6. Wohnraumlüftungssystem (01) nach Anspruch 5,
**gekennzeichnet durch**
eine Steuerungsvorrichtung, welche nachfolgende Einstellungen geregelt verändern kann, wobei aus den Wohnraumtemperaturen und den Temperatursollwerten Temperaturregelwerte gebildet werden:
- die Stellung der Warmluftventile (18) in Abhängigkeit von den Temperaturregelwerten; und/oder
- die Stellung der Raumluftventile (15) in Abhängigkeit von der Stellung der Warmluftventile (18) und dem Leistungssollwert; und/oder
- die Leistung des Zuluftheizgeräts (17) in Abhängigkeit von den Temperaturregelwerten und/oder der Warmlufttemperatur; und/oder
- die Leistung des Zuluftventilators (05) in Abhängigkeit vom Warmluftdruck und dem Leistungssollwert; und/oder
- die Stellung des Abluftventils (26) in Abhängigkeit von der Leistung des Zuluftventilators und dem Leistungssollwert; und/oder
- die Leistung des Abluftventilators (08) in Abhängigkeit von dem Abluftdruck und/oder dem Wohnraumluftdruck in Verbindung mit dem Umgebungsluftdruck und/oder dem Zuluftstrom in Verbindung mit dem Abluftstrom und/oder dem Leistungssollwert.

7. Wohnraumlüftungssystem (01) nach einem der Ansprüche 1 bis 6,
**dadurch gekennzeichnet,**
**dass** das Zuluftheizgerät (17) von einem beheizbaren Fluid durchströmt werden kann, welches mittels einer Wärmepumpe (34) mit Wärmetauscher (35) und/oder von einem Solarkollektor beheizt werden kann.

8. Wohnraumlüftungssystem (01) nach einem der Ansprüche 1 bis 7,
**dadurch gekennzeichnet,**
**dass** das Zuluftheizgerät (17) von einem gekühlten Fluid durchströmt werden kann, welches mittels einer Wärmepumpe (34) mit Wärmetauscher (35) und/oder von einem Erdwärmetauscher gekühlt werden kann.

9. Wohnraumlüftungssystem (01) nach einem der Ansprüche 1 bis 8,
**dadurch gekennzeichnet,**
**dass** die Zuluftaufteilung im Wärmerückgewinnungsgerät erfolgt und dieses zwei Zuluftöffnungen aufweist; und/oder dass der unbeheizte Luftkanal, der beheizte Luftkanal, die Anschlusskanäle, das Raumluftventil und die Warmluftventile im/am Wärmerückgewinnungsgerät angeordnet sind; und/oder dass die Wärmepumpe im/am Wärmerückgewinnungsgerät angeordnet ist.

10. Wohnraumlüftungssystem (01) nach einem der Ansprüche 1 bis 9,
**dadurch gekennzeichnet,**
**dass** die Leistung des Wärmerückgewinnungsgeräts (02) ausgehend von der erforderlichen Nennleistung zur reinen Belüftung des Gebäudes 200% bis 300% der Nennleistung beträgt.

11. Luftverteilvorrichtung (11) zur Verwendung bei einem Wohnraumlüftungssystem (01) nach einem der vorhergehenden Ansprüche mit einem unbeheizten Luftkanal (13), dem ein unbeheizter Zuluftstrom (06) zugeführt werden kann, und mit mehreren mit dem unbeheizten Luftkanal (13) verbundenen Anschlusskanälen (19), welche jeweils eine Luftausgangsöffnung aufweisen, mit einem beheizten Luftkanalabschnitt (16b), dem ein beheizter Zuluftstrom zugeführt werden kann und der mit jedem der Anschlusskanäle (19) verbunden ist, wobei in der Verbindung zwischen dem beheizten Luftkanalabschnitt (16b) und jedem der Anschlusskanäle (19) ein Warmluftventil (18) angeordnet ist, welches zumindest zwischen einer Geschlossenstellung und einer Offenstellung, insbesondere in mehreren Stufen und/oder stufenlos, gesteuert verstellbar ist,
**dadurch gekennzeichnet,**
**dass** zwischen dem unbeheizten Luftkanal (13) und zumindest einem, insbesondere jedem, Anschlusskanal (19) ein Raumluftventil (15) angeordnet ist, welches zumindest manuell, insbesondere gesteuert, zwischen einer Anfangsstellung und einer Endstellung in mehreren Stufen und/oder stufenlos einstellbar ist, wobei die Raumluftventile (15) und die Warmluftventile (18) unabhängig voneinander einstellbar sind.

12. Luftverteilvorrichtung (11) nach Anspruch 11,
**dadurch gekennzeichnet,**
**dass** der Zuluftstrom vom unbeheizten Luftkanal (13) in zumindest einen, insbesondere in jeden, Anschlusskanal (19) über ein Raumluftventil (15) einstellbar ist, welches zumindest manuell, insbesondere gesteuert, zwischen einer Anfangsstellung und einer Endstellung in mehreren Stufen und/oder stufenlos einstellbar ist, wobei insbesondere die Raumluftventile (15) und die Warmluftventile (18) unabhängig voneinander einstellbar sind.

13. Luftverteilvorrichtung (11) nach Anspruch 11 oder 12,
**gekennzeichnet durch**
einen beheizten Luftkanal (16) umfassend einen ersten Luftkanalabschnitt (16a) und nachfolgend den beheizten Luftkanalabschnitt (16b), wobei im ersten Luftkanalabschnitt (16a) ein Zuluftheizgerät (17) angeordnet ist, wobei insbesondere im Anschluss an eine Lufteingangsöffnung eine Zuluftaufteilung auf den unbeheizten Luftkanal (13) und den beheizten Luftkanal (16) erfolgt.

14. Luftverteilvorrichtung (11) nach einem der Ansprüche 11 bis 13,
**dadurch gekennzeichnet,**
**dass** die Luftverteilvorrichtung (11) modular um Segmentabschnitte erweiterbar ist, welche jeweils den unbeheizten Luftkanal (13) und den beheizten Luftkanalabschnitt (16b) erweitern und zumindest einen Anschlusskanal (19) und, insbesondere ein Raumluftventil (15) und, ein Warmluftventil (18) aufweisen.

15. Verfahren zur Wohnraumklimatisierung mit einem Wohnraumlüftungssystem (01) nach einem der vorhergehenden Ansprüche,
(A) wobei zur Auslegung und Inbetriebnahme
- zunächst der zur reinen Belüftung des jeweiligen Gebäudes erforderliche nominale Luftstrom sowie die jeweiligen nominalen Wohnraum bezogenen Luftmengen ermittelt werden,
- das Wohnraumlüftungssystem (01) auf einen Zuluftstrom (06) von 200% bis 300% des nominalen Luftstroms ausgelegt wird,
- bei einem Zuluftstrom (06) entsprechend dem nominalen Luftstrom bei geschlossenen Warmluftventilen (18) mittels Anpassung von Querschnitten und/oder durch Einstellung eines oder mehrerer Raumluftventile (15) die Wohnraum bezogenen Luftmengen an den Zuluftöffnungen (21) eingestellt werden;
(B) und wobei im Betrieb zur Regelung einer Heizfunktion
- zumindest ein Temperaturregelwert erfasst wird, in Abhängigkeit dessen eine Einschaltung oder Leistungssteigerung des Zuluftheizgerätes (17) und eine Öffnung des zugehörigen Warmluftventils (18) erfolgt,
- bei Abfallen des Warmluftdrucks aufgrund des Öffnens eines Warmluftventils (18) eine Leistungssteigerung des Zuluftventilators (05) erfolgt.

## Claims

1. A domestic ventilation system (01) comprising a heat recovery device (02) which has a counterflow heat exchanger (03) and a supply air ventilator (05) for sucking in an outside airflow (04) and for discharging a supply airflow (06) heated up by heat recovery and a supply air distribution device (11) having a heated air duct (16) and several connecting ducts (19) joining said heated air duct (16), a supply air distribution duct (20) being connected to each connecting duct (19), and having a supply air heater (17) disposed in the heated air duct (16), at least a part of the supply airflow (06) being heated by heat transfer in said supply air heater (17), the supply air being distributed to an unheated air duct (13) and the heated air duct (16) downstream of the counterflow heat exchanger (03), the unheated air duct (13) furthermore joining each of the connecting ducts (19) and a hot air valve (18) which is adjustable, in several stages and/or in a continuous manner, at least between a closed position and an open position being disposed in the junction between the heated air duct (16) and each connecting duct (19),
**characterized in that**
between the unheated air duct (13) and at least one, in particular each, connecting duct (19) a room air valve (15) is disposed, which is settable at least manually, in particular in a controlled manner, in several stages and/or in a continuous manner, between an initial position and an end position, the room air valves (15) and the hot air valves (18) being settable independently of each other.

2. The domestic ventilation system (01) according to claim 1,
**characterized in that**
the heat recovery device (02) has an exhaust air ventilator (08) for sucking in an exhaust airflow (07) and for discharging an outgoing airflow (09) cooled by heat recovery, the exhaust air being brought together from several exhaust air ducts (25, 30) by means of at least one exhaust air collector (24, 28), the beginning of each exhaust air duct (25, 30) having exhaust air openings (27, 31) in different rooms.

3. The domestic ventilation system (01) according to claim 1 or 2,
**characterized in that**
the hot air valves (18) are adjustable in a controlled manner.

4. The domestic ventilation system (01) according to claim 2 or according to claims 2 and 3,
**characterized in that**
an exhaust air valve (26, 29) which is at least manually adjustable is disposed in several, in particular in all, exhaust air ducts (25, 30) and/or in the exhaust air openings (27, 31), at least one exhaust air valve (26) being adjustable in a controlled manner at least between a closed position and an open position, in particular in several stages and/or in a continuous manner.

5. The domestic ventilation system (01) according to any one of claims 1 to 4,
**characterized by**
several of the following components:
a) temperature sensors for determining
- room-dependent inside temperatures,
- the ambient temperature outside the building,
- the outside air temperature upstream of the supply air ventilator (05),
- the supply air temperature downstream of the counterflow heat exchanger (03),
- the exhaust air temperature upstream of the exhaust air ventilator (08),
- the outgoing air temperature downstream of the counterflow heat exchanger (03),
- the hot air temperature in the heated air duct (16) downstream of the supply air heater (17);
b) at least one temperature control unit disposed in the room for defining in particular room-dependent temperature set points;
c) pressure sensors for determining
- the room air pressure in the building,
- the ambient air pressure outside the building,
- the outside air pressure upstream of the supply air ventilator (05),
- the supply air pressure downstream of the counterflow heat exchanger (03),
- the exhaust air pressure upstream of the exhaust air ventilator (08),
- the outgoing air pressure downstream of the counterflow heat exchanger (03),
- the hot air pressure in the heated air duct (16),
- the suction pressure in an exhaust air duct (25) between the exhaust air opening (27) and the exhaust air valve (26);
d) a volume flow meter, in particular an impeller meter, for determining
- the supply airflow downstream of the counterflow heat exchanger (03),
- the exhaust airflow upstream of the exhaust air ventilator (08) or downstream of the counterflow heat exchanger (03);
e) at least one power switch disposed in the room for setting a power set point.

6. The domestic ventilation system (01) according to claim 5,
**characterized by**
a control device which changes the following settings in a regulated manner, temperature regulation values being created from the room temperatures and the temperature set points:
- the position of the hot air valves (18) as a function of the temperature regulation values; and/or
- the position of the room air valves (15) as a function of the position of the hot air valves (18) and the power set point; and/or
- the power of the supply air heater (17) as a function of the temperature regulation values and/or the hot air temperature; and/or
- the power of the supply air ventilator (05) as a function of the hot air pressure and the power set point; and/or
- the position of the exhaust air valve (26) as a function of the power of the supply air ventilator and the power set point; and/or
- the power of the exhaust air ventilator (08) as a function of the exhaust air pressure and/or the room air pressure in combination with the ambient air pressure and/or the supply airflow in combination with the exhaust airflow and/or the power set point.

7. The domestic ventilation system (01) according to any one of claims 1 to 6,
**characterized in that**
a heatable fluid, which is heated by means of a heat pump (34) having a heat exchanger (35) and/or by means of a solar collector, flows through the supply air heater (17).

8. The domestic ventilation system (01) according to any one of claims 1 to 7,
**characterized in that**
a cooled fluid, which is cooled by means of a heat pump (34) having a heat exchanger (35) and/or by means of an geothermal heat exchanger, flows through the supply air heater (17).

9. The domestic ventilation system (01) according to any one of claims 1 to 8,
**characterized in that**
the supply air is distributed in the heat recovery device and **in that** said heat recovery device has two supply air openings; and/or
the unheated air duct, the heated air duct, the connecting ducts, the room air valve and the hot air valves are disposed in/at the heat recovery device; and/or
the heat pump is disposed in/at the heat recovery device.

10. The domestic ventilation system (01) according to any one of claims 1 to 9,
**characterized in that**
the power of the heat recovery device (02) is 200 % to 300 % of the nominal power, based on the required nominal power for the simple ventilation of the building.

11. An air distribution device (11) for the use in a domestic ventilation system (01) according to any one of the preceding claims having an unheated air duct (13) to which an unheated supply airflow (06) is supplied and having several connecting ducts (19) joining the unheated air duct (13), each of which (19) has an air outlet opening, and having a heated air duct portion (16b) to which a heated supply airflow is supplied and which joins each of the connecting ducts (19), a hot air valve (18) which is adjustable in a controlled manner, in particular in several stages and/or in a continuous manner, at least between a closed position and an open position, being disposed in the junction between the heated air duct portion (16b) and each of the connecting ducts (19),
**characterized in that**
between the unheated air duct (13) and at least one, in particular each, connecting duct (19) a room air valve (15) is disposed, which is settable at least manually, in particular in a controlled manner, in several stages and/or in a continuous manner, between an initial position and an end position, the room air valves (15) and the hot air valves (18) being settable independently of each other.

12. The air distribution device (11) according to claim 11,
**characterized in that**
the supply airflow from the unheated air duct (13) into at least one, in particular into each, connecting duct (19) is settable via a room air valve (15) which is settable at least manually, in particular in a controlled manner, in several stages and/or in a continuous manner, between an initial position and an end position, in particular the room air valves (15) and the hot air valves (18) being settable independently of each other.

13. The air distribution device (11) according to claim 11 or 12,
**characterized by**
a heated air duct (16) comprising a first air duct portion (16a) and, downstream thereof, the heated air duct portion (16b), a supply air heater (17) being disposed in the first air duct portion (16a), in particular the supply air being distributed to the unheated air duct (13) and the heated air duct (16) downstream of an air inlet opening.

14. The air distribution device (11) according to any one of claims 11 to 13,
**characterized in that**
the air distribution device (11) is modularly enlargeable by segment portions, each segment portion enlarging the unheated air duct (13) and the heated air duct portion (16b) and having at least one connecting duct (19) and in particular one room air valve (15) and one hot air valve (18).

15. A method for domestic air-conditioning having a domestic ventilation system (01) according to any one of the preceding claims,
(A) wherein, for the configuration and the initial start-up,
- the nominal airflow required for the simple ventilation of the respective building and the respective nominal room-related air quantities are initially determined,
- the domestic ventilation system (01) is configured for a supply airflow (06) of 200 % to 300 % of the nominal airflow,
- the room-related air quantities are set at the supply air openings (21) by adjusting cross sections and/or by setting one or several room air valve/s (15) when a supply airflow (06) corresponds to the nominal airflow in a closed state of the hot air valves (18);
(B) and wherein, during the operation for regulating a heating function,
- at least one temperature regulation value is recorded and depending on said temperature regulation value, the supply air heater (17) is switched on or the power of said supply air heater (17) is increased and the associated hot air valve (18) is opened,
- the power of the supply air ventilator (05) is increased when the hot air pressure drops because a hot air valve (18) has been opened.

## Revendications

1. Système de ventilation (01) domestique comprenant un dispositif (02) de récupération de chaleur qui a un échangeur de chaleur (03) à contre-courant et un ventilateur (05) d'air amené pour aspirer un écoulement (04) d'air extérieur et pour évacuer un écoulement (06) d'air amené échauffé par la récupération de chaleur et un dispositif (11) de distribution d'air amené ayant un conduit d'air (16) chauffé et plusieurs conduits de raccordement (19) reliés audit conduit d'air (16) chauffé, un conduit (20) de distribution d'air amené étant raccordé à chaque conduit de raccordement (19), et ayant un appareil de chauffage (17) d'air amené disposé dans le conduit d'air (16) chauffé, au moins une partie de l'écoulement (06) d'air amené étant chauffée par transfert thermique dans ledit appareil de chauffage (17) d'air amené, l'air amené étant distribué à un conduit d'air (13) non chauffé et au conduit d'air (16) chauffé en aval de l'échangeur de chaleur (03) à contre-courant, en outre, le conduit d'air (13) non chauffé étant relié à chacun des conduits de raccordement (19) et un clapet (18) d'air chaud qui est ajustable au moins entre une position fermée et une position ouverte en plusieurs étapes et/ou en continu étant disposé dans la jonction entre le conduit d'air (16) chauffé et chaque conduit de raccordement (19),
**caractérisé en ce**
**qu'**entre le conduit d'air (13) non chauffé et au moins un, notamment chaque, conduit de raccordement (19) est disposé un clapet (15) d'air intérieur qui est réglable au moins manuellement, notamment de manière contrôlée, en plusieurs étapes et/ou en continu, entre une position initiale et une position finale, les clapets (15) d'air intérieur et les clapets (18) d'air chaud étant réglables de manière indépendante les uns des autres.

2. Système de ventilation (01) domestique selon la revendication 1,
**caractérisé en ce que**
le dispositif (02) de récupération de chaleur a un ventilateur (08) d'air vicié pour aspirer un écoulement (07) d'air vicié et pour évacuer un écoulement (09) d'air d'échappement refroidi par la récupération de chaleur, l'air vicié étant rassemblé de plusieurs conduits (25, 30) d'air vicié au moyen d'au moins un collecteur (24, 28) d'air vicié, des ouvertures (27, 31) d'air vicié étant situées au début desdits conduits (25, 30) d'air vicié dans des pièces d'habitation différentes.

3. Système de ventilation (01) domestique selon la revendication 1 ou 2,
**caractérisé en ce que**
les clapets (18) d'air chaud sont ajustables de manière contrôlée.

4. Système de ventilation (01) domestique selon la revendication 2 ou selon les revendications 2 et 3,
**caractérisé en ce**
**qu'**un clapet (26, 29) d'air vicié qui est ajustable au moins manuellement est disposé dans plusieurs conduits (25, 30) d'air vicié, notamment dans tous les conduits (25, 30) d'air vicié, et/ou dans les ouvertures (27, 31) d'air vicié, au moins un clapet (26) d'air vicié étant ajustable de manière contrôlée au moins entre une position fermée et une position ouverte, notamment en plusieurs étapes et/ou en continu.

5. Système de ventilation (01) domestique selon l'une quelconque des revendications 1 à 4,
**caractérisé par**
plusieurs des composants suivants :
a) des capteurs de température pour déterminer
- des températures intérieures dépendantes de la pièce d'habitation,
- la température ambiante à l'extérieur du bâtiment,
- la température de l'air extérieur en amont du ventilateur (05) d'air amené,
- la température de l'air amené en aval de l'échangeur de chaleur (03) à contre-courant,
- la température de l'air vicié en amont du ventilateur (08) d'air vicié,
- la température de l'air d'échappement en aval de l'échangeur de chaleur (03) à contre-courant,
- la température de l'air chaud dans le conduit d'air (16) chauffé en aval de l'appareil de chauffage (17) d'air amené ;
b) au moins un appareil de contrôle de la température disposé dans la pièce d'habitation pour définir des valeurs de consigne de la température, notamment des valeurs de consigne de la température dépendantes de la pièce d'habitation ;
c) des capteurs de pression pour déterminer
- la pression de l'air de la pièce d'habitation dans le bâtiment,
- la pression de l'air ambiant à l'extérieur du bâtiment,
- la pression de l'air extérieur en amont du ventilateur (05) d'air amené,
- la pression de l'air amené en aval de l'échangeur de chaleur (03) à contre-courant,
- la pression de l'air vicié en amont du ventilateur (08) d'air vicié,
- la pression de l'air d'échappement en aval de l'échangeur de chaleur (03) à contre-courant,
- la pression de l'air chaud dans le conduit d'air (16) chauffé,
- la pression d'aspiration dans un conduit (25) d'air vicié entre l'ouverture (27) d'air vicié et le clapet (26) d'air vicié ;
d) un appareil de mesure du débit volumique, notamment un appareil de mesure à roues à ailettes, pour déterminer
- l'écoulement d'air amené en aval de l'échangeur de chaleur (03) à contre-courant,
- l'écoulement d'air vicié en amont du ventilateur (08) d'air vicié ou en aval de l'échangeur de chaleur (03) à contre-courant ;
e) au moins un sectionneur de puissance disposé dans la pièce d'habitation pour régler une valeur de consigne de la puissance.

6. Système de ventilation (01) domestique selon la revendication 5,
**caractérisé par**
un dispositif de contrôle qui change les réglages suivants de manière régulée, des valeurs de régulation de la température étant créées à partir des températures de la pièce d'habitation et des valeurs de consigne de la température :
- la position des clapets (18) d'air chaud en fonction des valeurs de régulation de la température ; et/ou
- la position des clapets (15) d'air d'une pièce d'habitation en fonction de la position des clapets (18) d'air chaud et de la valeur de consigne de la puissance ; et/ou
- la puissance de l'appareil de chauffage (17) d'air amené en fonction des valeurs de consigne de la température et/ou de la température de l'air chaud ; et/ou
- la puissance du ventilateur (05) d'air amené en fonction de la pression de l'air chaud et de la valeur de consigne de la puissance ; et/ou
- la position du clapet (26) d'air vicié en fonction de la puissance du ventilateur (05) d'air amené et de la valeur de consigne de la puissance ; et/ou
- la puissance du ventilateur (08) d'air vicié en fonction de la pression de l'air vicié et/ou de la pression de l'air de la pièce d'habitation en combinaison avec la pression de l'air ambiant et/ou de l'écoulement d'air amené en combinaison avec l'écoulement d'air vicié et/ou la valeur de consigne de la puissance.

7. Système de ventilation (01) domestique selon l'une quelconque des revendications 1 à 6,
**caractérisé en ce que**
l'appareil de chauffage (17) d'air amené est traversé par un fluide chauffable qui est chauffé au moyen d'une pompe (34) à chaleur ayant un échangeur de chaleur (35) et/ou au moyen d'un capteur solaire.

8. Système de ventilation (01) domestique selon l'une quelconque des revendications 1 à 7,
**caractérisé en ce que**
l'appareil de chauffage (17) d'air amené est traversé par un fluide refroidi qui est refroidi au moyen d'une pompe (34) à chaleur ayant un échangeur de chaleur (35) et/ou au moyen d'un échangeur géothermique.

9. Système de ventilation (01) domestique selon l'une quelconque des revendications 1 à 8,
**caractérisé en ce que**
l'air amené est distribué dans le dispositif de récupération de chaleur et **en ce que** ledit dispositif de récupération de chaleur a deux ouvertures d'air amené ; et/ou
le conduit d'air non chauffé, le conduit d'air chauffé, les conduits de raccordement, le clapet d'air intérieur et les clapets d'air chaud sont disposés dans/sur le dispositif de récupération de chaleur ; et/ou la pompe à chaleur est disposée dans/sur le dispositif de récupération de chaleur.

10. Système de ventilation (01) domestique selon l'une quelconque des revendications 1 à 9,
**caractérisé en ce que**
la puissance du dispositif (02) de récupération de chaleur est 200 % à 300 % de la puissance nominale sur la base de la puissance nominale requise pour la seule ventilation du bâtiment.

11. Dispositif (11) de distribution d'air pour l'utilisation dans un système de ventilation (01) domestique selon l'une quelconque des revendications précédentes ayant un conduit d'air (13) non chauffé auquel un écoulement (06) d'air amené non chauffé est amené et ayant plusieurs conduits de raccordement (19) reliés au conduit d'air (13) non chauffé, dont chacun (19) a une ouverture de sortie d'air, et ayant une section (16b) de conduit d'air chauffé à laquelle un écoulement d'air amené chauffé est amené et qui est reliée à chacun des conduits de raccordement (19), un clapet (18) d'air chaud qui est ajustable de manière contrôlée, notamment en plusieurs étapes et/ou en continu, au moins entre une position fermée et une position ouverte, étant disposé dans la jonction entre la section (16b) du conduit d'air chauffé et chacun des conduits de raccordement (19),
**caractérisé en ce**
**qu'**entre le conduit d'air (13) non chauffé et au moins un, notamment chaque, conduit de raccordement (19) est disposé un clapet (15) d'air intérieur qui est réglable au moins manuellement, notamment de manière contrôlée, en plusieurs étapes et/ou en continu, entre une position initiale et une position finale , les clapets (15) d'air intérieur et les clapets (18) d'air chaud étant réglables de manière indépendante les uns des autres.

12. Dispositif (11) de distribution d'air selon la revendication 11,
caractérisé en ce
l'écoulement d'air amené du conduit d'air (13) non chauffé dans au moins un conduit de raccordement (19), notamment dans tous les conduits de raccordement (19), est réglable via un clapet (15) d'air intérieur qui est réglable au moins manuellement, notamment de manière contrôlée, en plusieurs étapes et/ou en continu, entre une position initiale et une position finale, notamment les clapets (15) d'air intérieur et les clapets (18) d'air chaud étant réglables de manière indépendante les uns des autres.

13. Dispositif (11) de distribution d'air selon la revendication 11 ou 12,
**caractérisé par**
un conduit d'air (16) chauffé comprenant une première section (16a) de conduit d'air chauffé et, en aval, la section (16b) de conduit d'air chauffé, un appareil de chauffage (17) d'air amené étant disposé dans la première section (16a) de conduit d'air chauffé, notamment l'air amené étant distribué au conduit d'air (13) non chauffé et au conduit d'air (16) chauffé en aval d'une ouverture d'entrée d'air.

14. Dispositif (11) de distribution d'air selon l'une quelconque des revendications 11 à 13,
caractérisé en ce
le dispositif (11) de distribution d'air est extensible de manière modulaire par des sections de segments, chaque section de segments étendant le conduit d'air (13) non chauffé et la section (16b) de conduit d'air chauffé et ayant au moins un conduit de raccordement (19) et notamment un clapet (15) d'air intérieur et un clapet (18) d'air chaud.

15. Procédé pour la climatisation domestique ayant un système de ventilation (01) domestique selon l'une quelconque des revendications précédentes,
(A) dans lequel, pour la configuration et la mise en service,
- d'abord, sont déterminés l'écoulement d'air nominal requis pour la seule ventilation du bâtiment respectif et les quantités d'air nominales respectives liées à une pièce d'habitation,
- le système de ventilation (01) domestique est configuré pour un écoulement (06) d'air amené de 200 % à 300 % de l'écoulement d'air nominal,
- les quantités d'air liées à une pièce d'habitation sont réglées aux ouvertures (21) d'air amené en ajustant des sections transversales et/ou en réglant un ou plusieurs clapet/s (15) d'air intérieur lorsque un écoulement (06) d'air amené correspond à l'écoulement d'air nominal quand les clapets (18) d'air chaud sont fermés ;
(B) et dans lequel, pendant le fonctionnement, pour réguler une fonction de chauffage,
- au moins une valeur de régulation de la température est enregistrée et, en fonction de ladite valeur de régulation de la température, l'appareil de chauffage (17) d'air amené est mis en marche ou la puissance dudit appareil de chauffage (17) d'air amené est augmentée et le clapet (18) d'air chaud associé est ouvert,
- la puissance du ventilateur (05) d'air amené est augmentée lorsque la pression de l'air chaud baisse parce qu'un clapet (18) d'air chaud a été ouvert.
